# FASCICULE DE BREVET EUROPEEN

(11) **EP 0 670 436 B1**
(45) Date de publication et mention de la délivrance du brevet: **08.04.1998**
(21) Numéro de dépôt: 95400230.9
(22) Date de dépôt: 03.02.1995
(51) Int. Cl.: F16H 7/12

(54) **Tendeur de courroie pour moteur à combustion interne de véhicule automobile**
Riemenspanner für einen Verbrennungsmotor eines Kraftfahrzeugs
Belt tensioner for an automotive I.C. engine

(30) Priorité: 04.02.1994 FR 9401252
(43) Date de publication de la demande: 06.09.1995
(73) Titulaire: RENAULT, 92109 Boulogne-Billancourt (FR)
(72) Inventeur: Romon, Paul, F-59274 Marquillies (FR); Sady, Bernard, F-59133 Phalempin (FR)
(74) Mandataire: Fernandez, Francis Lionel

(56) Documents cités:
- DE-C- 4 223 325
- FR-A- 2 470 305
- US-A- 4 767 383

## Description

La présente invention se rapporte à un dispositif destiné à assurer la mise en tension d'une courroie de transmission pour moteur à combustion interne de véhicule automobile. Elle concerne plus particulièrement un tendeur de courroie comprenant un galet destiné à être appliqué contre la courroie pour tendre cette dernière, et des moyens pour régler la position du galet par rapport à la courroie en vue du réglage de la tension de la courroie.

Le réglage de la tension des courroies d'entraînement est important pour permettre à ces dernières d'assurer correctement leur fonction d'entraînement en rotation et leur tenue en endurance, en particulier pour ce qui est des courroies synchrones telles que les courroies de distribution. A cet effet, il est connu d'opérer la mise sous tension des courroies d'un moteur par un tendeur mécanique dont on règle la position lors du montage du moteur sur chaîne et qu'on bloque ensuite dans sa position.

Le dispositif tendeur mécanique comprend classiquement un galet monté en rotation, destiné à être appliqué contre la courroie à tendre et des moyens pour régler la position de ce galet par rapport à la courroie en vue du réglage de la tension de la courroie.

Un exemple de dispositif tendeur de courroie connu pour véhicule automobile est représenté par la figure 1 du dessin annexé, un système similaire est également décrit dans le document FR-A-2.470.305.

La transmission représentée comporte une poulie motrice 1 et deux poulies réceptrices 2,3 reliées par une courroie sans fin 4. Les poulies 1,2 et 3 sont montées, respectivement sur des arbres qui tourillonnent dans le bâti ou carter d'un moteur à combustion interne. La courroie 4 passe également sur un galet tendeur 5 dit excentrique qui se caractérise par une excentration de son axe de rotation par rapport à son axe d'articulation. Un tel système comprend donc un galet proprement dit monté en rotation autour de son axe sur un porte-galet lui-même en rotation, autour d'un axe excentré par rapport à l'axe de rotation du galet sur un support pouvant être réglé et bloqué dans sa position. Ce galet tendeur 5 est monté sur une platine de support 6 déplaçable.

La platine de support 6 est articulée à l'une de ses extrémités autour d'un pivot formé par une vis 7. L'extrémité opposée de la platine de support 6 est également reliée à la structure fixe 8 du moteur par des moyens de serrage aptes à l'immobiliser en position par rapport à la structure. Pour ce faire, l'extrémité de la platine de support présente une lumière 9 en arc de cercle, faisant office de glissière dans laquelle est logée une tige filetée 10 solidaire de la structure 8 du moteur. Cette tige filetée 10 coopère avec un écrou et une entretoise pour assurer le blocage en position du tendeur.

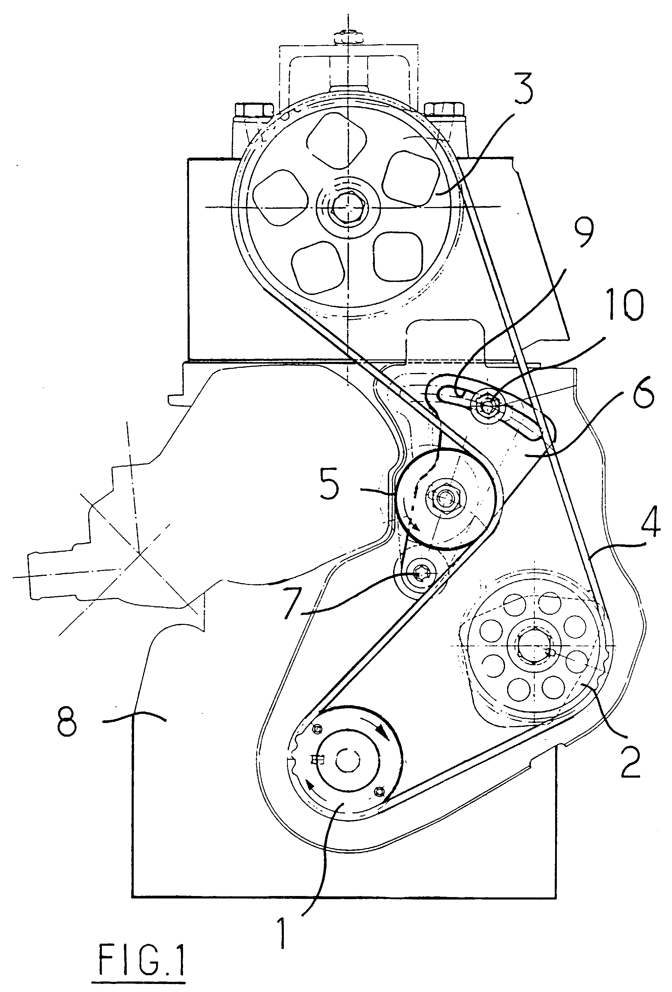

Le réglage de la tension s'opère alors en deux temps. Le déplacement de la platine de support 6 (de la gauche vers la droite conformément à la figure 1) permet d'opérer un premier réglage de la tension de la courroie 4. Ce réglage est ajusté à la tension préconisée par rotation du galet tendeur excentrique 5 au moyen d'une clé dynamométrique.

Cette conception des dispositifs pour le réglage de la tension d'une courroie d'entraînement présente l'inconvénient de requérir l'utilisation d'un galet tendeur excentrique relativement coûteux et de nécessiter deux opérations lors du montage, ce qui s'avère pénalisant lors de productions en grande série.

Le but de l'invention est donc de proposer un dispositif de réglage de la tension d'une courroie d'entraînement qui remédie aux inconvénients précités en ce qu'il supprime l'utilisation d'un galet tendeur de type excentrique et en ce que l'opération de réglage de la tension ne nécessite plus qu'une seule étape, tout en étant à la fois fiable et précis.

Le dispositif tendeur de courroie selon l'invention, comprend un galet monté en rotation et destiné à être appliqué contre une courroie pour tendre cette dernière, une platine de support du galet articulée sur un bâti à une de ses extrémités et dont l'autre extrémité présente une lumière dans laquelle est logée une tige filetée solidarisée au bâti, et des moyens pour régler la position du galet par rapport à la courroie en vue du réglage de la tension de cette dernière.

Selon l'invention le dispositif tendeur de courroie est caractérisé en ce que les moyens pour régler la position du galet par rapport à la courroie sont formés par une rondelle s'engageant sur la tige filetée de façon à pouvoir tourner autour de cette dernière, cette rondelle présentant en saillie sur sa face tournée vers la platine de support un doigt destiné à venir se loger dans une rainure correspondante agencée sur la platine de support.

Selon une autre caractéristique du dispositif tendeur de courroie objet de l'invention, le doigt en saillie à la surface de la rondelle est disposé au voisinage de l'extrémité radiale de cette dernière.

Selon une autre caractéristique du dispositif tendeur de courroie objet de l'invention, la rainure destinée à loger le doigt porté par la rondelle débouche dans la lumière agencée à une extrémité de la platine de support dans laquelle est logée une tige filetée solidarisée au bâti.

Selon une autre caractéristique du dispositif tendeur de courroie objet de l'invention, la rainure débouche sensiblement au centre de la lumière.

Selon une autre caractéristique du dispositif tendeur de courroie objet de l'invention, la rondelle présente des logements permettant son entraînement en rotation par un outil adapté tel qu'une clé à ergots.

On comprendra mieux les buts, aspects et avantages de la présente invention, d'après la description donnée ci-après d'un mode de réalisation de l'invention, ce mode de réalisation étant donné à titre d'exemple non limitatif, en se référant au dessin annexé, dans lequel :
- la figure 1 est une vue d'ensemble d'une transmission par courroie muni d'un dispositif tendeur pour courroie de transmission de moteur à combustion interne selon l'art antérieur ;
- la figure 2 est une vue en plan montrant le dispositif tendeur objet de l'invention.
- les figures 3a et 3b sont des vues de détail respectivement de face et de profil en coupe axiale de la rondelle représentée à la figure 2.

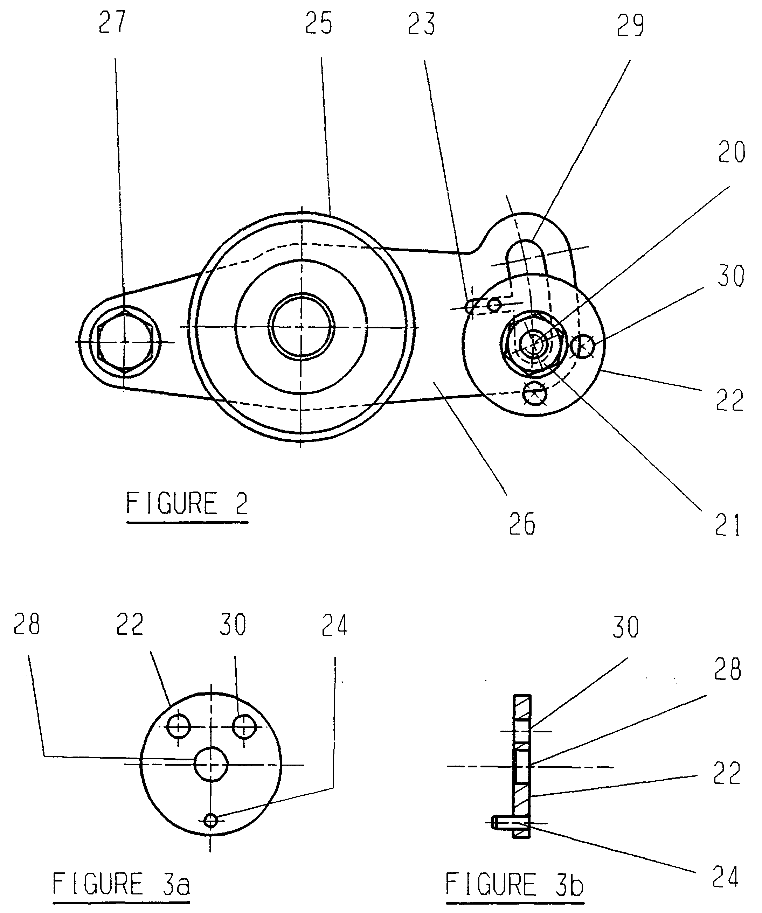

Le dispositif tendeur de courroie selon l'invention va être décrit conformément aux figures 2 et 3a,3b. Seuls les éléments du dispositif tendeur de courroie nécessaires à la compréhension de l'invention ont été figurés.

Le dispositif comporte un galet 25 destiné à être appliqué contre une courroie pour tendre cette dernière. Ce galet simple possède un seul axe de rotation porté par une platine de support 26 qui peut être fixée sur le bâti d'un moteur dans une position angulaire choisie. Pour ce faire, la platine est articulée à une des ses extrémités par l'intermédiaire d'une vis 27 formant pivot. L'extrémité opposée de la platine de support 26 est également reliée au bâti par des moyens de serrage aptes à l'immobiliser en position par rapport au bâti. Pour ce faire, cette extrémité de la platine de support 26 opposée à l'articulation présente une lumière 9 en arc de cercle encore appelée lyre, faisant office de glissière dans laquelle est logée une tige filetée 20 solidarisée au bâti.

Conformément à l'invention cette tige filetée 20 coopère avec un écrou 21 et une rondelle 22 formant entretoise permettant d'opérer le réglage de la tension et le blocage en position du tendeur. La rondelle 22 comporte donc un alésage central 28 permettant son engagement sur la tige filetée 20 et sa rotation autour de cette dernière. La rondelle 22 présente par ailleurs en saillie sur sa face tournée vers la platine de support 26 un doigt ou pige 24 destiné à venir se loger dans une rainure correspondante 23 agencée sur la platine de support 26. Ce doigt 24 s'étend préférentiellement au voisinage de l'extrémité radiale de la rondelle (22). La rainure 23 agencée sur la platine 26 pour accueillir le doigt 24 débouche sensiblement au centre de la lumière 29 où est logée la tige 20. Par ailleurs, la rondelle 22 présente des logements 30 permettant son entraînement en rotation par un outil adapté tel qu'une clé à ergots non figurée.

Le dispositif tendeur de courroie décrit fonctionne de la façon suivante. Lors du montage la rondelle 22 est introduite sur la tige filetée de façon à positionner le doigt 24 dans la rainure 23. L'écrou 21 étant desserré, un couple de valeur déterminé est appliqué sur la rondelle 22. La rotation de la rondelle 22 par la clé à ergots entraîne alors par l'intermédiaire du doigt 24 qui est en appui sur les bords de la rainure 23, le basculement correspondant de la platine 26 autour de son axe 27 et donc permet d'appliquer le galet 25 contre la courroie et d'ajuster la tension de cette dernière aux valeurs préconisées de façon simple et précise. Il ne suffit plus ensuite que de serrer l'écrou 21 pour immobiliser en position la platine. Ainsi, le dispositif tendeur de courroie selon l'invention ne nécessite plus de galet dit excentrique et ne requière qu'une seule étape de réglage.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

1. Dispositif tendeur de courroie comprenant un galet (25) monté en rotation et destiné à être appliqué contre une courroie (4) pour tendre cette dernière, une platine de support (26) dudit galet (25) articulée sur un bâti (8) à une de ses extrémités et dont l'autre extrémité présente une lumière (29) dans laquelle est logée une tige filetée (20) solidarisée au bâti (8), et des moyens (23,22) pour régler la position dudit galet par rapport à la courroie en vue du réglage de la tension de cette dernière, caractérisé en ce que lesdits moyens sont formés par une rondelle (22) s'engageant sur la tige filetée (20) de façon à pouvoir tourner autour de cette dernière, ladite rondelle (22) présentant en saillie sur sa face tournée vers la platine de support (26) un doigt (24) destiné à venir se loger dans une glissière (23) agencée sur la platine de support (26).

2. Dispositif tendeur de courroie selon la revendication 1, caractérisé en ce que le doigt (24) en saillie est disposé au voisinage de l'extrémité radiale de la rondelle (22).

3. Dispositif tendeur de courroie selon l'une quelconque des revendications 1 à 2, caractérisé en ce que la glissière (23) destinée à loger le doigt (24), débouche dans la lumière (29).

4. Dispositif tendeur de courroie selon la revendication 3, caractérisé en ce que la glissière (23) débouche sensiblement au centre de la lumière (29).

5. Dispositif tendeur de courroie selon l'une quelconque des revendications 1 à 4, caractérisé en ce que la rondelle (22) présente des orifices (30) permettant son entraînement en rotation par un outil adapté tel qu'une clé à ergots.

## Patentansprüche

1. Riemenspannvorrichtung mit einer rotierbar montierten Rolle (25) zum Wirken auf einen Riemen (4), um diesen zu spannen, mit einer Halteplatte (26) für diese Rolle (25), die auf einem Tragelement (8) mit einem ihrer Enden gelenkig montiert ist und deren anderes Ende einen Schlitz (29) aufweist, in dem eine mit dem Tragelement (8) einstückige Gewindestange (20) angeordnet ist, und mit Mitteln (23, 22) zur Einstellung der Position der Rolle bezüglich des Riemens im Hinblick auf die Einstellung der Spannung desselben, dadurch gekennzeichnet, dass die Mittel durch eine Scheibe (22) gebildet sind, die derart in die Gewindestange (20) eingreift, dass sie um die Gewindestange (20) drehbar ist, wobei die Scheibe (22) auf ihrer der Halteplatte (26) zugewandten Seite einen herausragenden Zapfen (24) aufweist, der in eine Leitschiene (23) eingreift, die auf der Halteplatte 26 ausgespart ist.

2. Riemenspannvorrichtung nach Anspruch 1, dadurch gekennzeichnet, daß der herausragende Zapfen (24) in der Nähe des radialen Endes der Scheibe (22) angeordnet ist.

3. Riemenspannvorrichtung nach einem der Ansprüche 1 bis 2, dadurch gekennzeichnet, daß die Leitschiene (23) zur Aufnahme des Zapfens (24) in den Schlitz (29) einmündet.

4. Riemenspannvorrichtung nach Anspruch 3, dadurch gekennzeichnet, daß die Leitschiene (23) ungefähr mittig in den Schlitz (29) einmündet.

5. Riemenspannvorrichtung nach einem der Ansprüche 1 bis 4, dadurch gekennzeichnet, daß die Scheibe (22) Öffnungen (30) aufweist, die ihre Drehung mittels eines geeigneten Werkzeugs, wie eines Zweilochmutterndrehers, ermöglichen.

## Claims

1. A belt tensioning device comprising a rotatably mounted pulley (25) intended to be applied against a belt (4) to tension the belt, a support plate (26) for said pulley (25), which support plate is pivotably mounted on a support structure (8) at one of its ends while the other end thereof has an opening (29) in which there is accommodated a screwthreaded rod (20) which is fixed with respect to the support structure (8), and means (23, 22) for regulating the position of said pulley with respect to the belt for regulation of the belt tension, characterised in that said means are formed by a disc (22) engaging on the screwthreaded rod (20) in such a way as to be capable of rotating about the latter, said disc (22) having in projecting relationship on its face which is towards the support plate (26) a finger (24) intended to be accommodated in a sliding guide (23) provided on the support plate (26).

2. A belt tensioning device according to claim 1 characterised in that the projecting finger (24) is disposed in the vicinity of the radial end of the disc (22).

3. A belt tensioning device according to either one of claims 1 and 2 characterised in that the sliding guide (23) for accommodating the finger (24) opens into the opening (29).

4. A belt tensioning device according to claim 3 characterised in that the sliding guide (23) opens substantially at the centre of the opening (29).

5. A belt tensioning device according to any one of claims 1 to 4 characterised in that the disc (22) has orifices (30) for it to be driven in rotation by a suitable tool such as a spanner having pegs for engaging into the orifices.
